(19) European Patent Office — Europäisches Patentamt — Office européen des brevets

(11) **EP 1 326 416 A1**

(12) **EUROPEAN PATENT APPLICATION**

(43) Date of publication:
**09.07.2003 Bulletin 2003/28**

(51) Int Cl.$^7$: **H04N 1/00**

(21) Application number: **02250024.3**

(22) Date of filing: **03.01.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Fujifilm Electronic Imaging Limited Hemel Hempstead, Herts, HP2 7RH (GB)**

(72) Inventor: **Rughani, Daxa Neykumar**
**Hemel Hempstead, Hertfordshire HP2 4DU (GB)**

(74) Representative: **Skone James, Robert Edmund**
**GILL JENNINGS & EVERY**
**Broadgate House**
**7 Eldon Street**
**London EC2M 7LH (GB)**

(54) **Compensation of lens field curvature**

(57)  A method of generating a filter set to enable compensation of lens field curvature of a focussing lens is described. The method comprises

i) imaging a test chart such as a half-tone representation of a flat tint through different portions of a lens (3) onto a detector;

ii) generating a reference image of a two-dimensional array of pixels of the half-tone representation imaged through a substantially central portion of the lens;

iii) generating an offset image of a two dimensional array of pixels of the half-tone representation imaged through a portion of the lens offset from the central portion, the two-dimensional array offset image being registered with respect to the reference image;

iv) computing and storing a set of filter coefficients which convert the offset image to the reference image; and

v) repeating steps iii) and iv) for a number of different offset images.

Fig 1 Image at Edge of Scan

Printed by Jouve, 75001 PARIS (FR)

**EP 1 326 416 A1**

**Description**

The invention relates to methods and apparatus for compensating for lens field curvature.

The invention is primarily concerned with problems which can arise in image scanning systems such as flatbed scanners in which an image is scanned by a light beam along a series of scan lines, light transmitted through the image or reflected from the image being transmitted to a lens which focuses the light onto a detector array. Problems can arise due to the curvature of the lens at its edge which tends to blur the image. For images that must be very accurately detected, this is a problem.

The problem is particularly acute when attempting to reproduce a half-tone dot image on a dot for dot basis. This process is known as copy-dot processing.

One approach is simply to select a lens suited to the particular scanner but this usually requires a very expensive lens which is undesirable.

In accordance with a first aspect of the present invention, a method of generating a filter set to enable compensation of lens field curvature of a focussing lens comprises

    i) imaging a test chart of a flat tint through different portions of a lens onto a detector;
    ii) generating a reference image of a two-dimensional array of pixels of the test chart imaged through a substantially central portion of the lens;
    iii) generating an offset image of a two dimensional array of pixels of the test chart imaged through a portion of the lens offset from the central portion, the two-dimensional array offset image being registered with respect to the reference image;
    iv) computing and storing a set of filter coefficients which convert the offset image to the reference image; and
    v) repeating steps iii) and iv) for a number of different offset images.

In accordance with a second aspect of the present invention, apparatus for generating a filter set to enable compensation of lens field curvature of a focussing lens comprises a scanning system including a source of illumination, a focussing lens and a detector array for imaging a test chart of a flat tint focussed through different portions of the lens onto the detector array; and a processing system for carrying out a method according to the first aspect of the invention.

We have recognised that it is possible to compensate for lens field curvature mathematically by building up a set of filters which enables the portion of an image detected through a non-central portion of the lens to be enhanced or sharpened to a level substantially corresponding to that part of the image detected through the central portion of the lens.

The test chart is preferably a half-tone representation.

In some cases, the offset images could be separated from one another but preferably they substantially abut one another.

Although a separate filter could be defined for each pixel of each image, preferably the same filter is defined for an array of pixels, for example a 70 x 70 array.

Preferably, step iv) comprises a least squares fitting algorithm.

The detector is typically a CCD array although other types of detector could be used. The scanning system could be based on transmitted or reflected light and is typically a flatbed scanner.

In accordance with a third aspect of the present invention, we provide a storage medium storing a set of filters created by a method according to the first aspect of the invention.

Once created, the filter set can then be used to enhance any image which is scanned using the same lens.

An example of a method and apparatus according to the invention will now be described with reference to the accompanying drawings, in which:-

    Figures 1 and 2 illustrate the appearance of a half-tone flat tint imaged through an edge of a lens and the centre of the lens respectively;
    Figures 3 and 4 illustrate the images obtained in Figures 1 and 2 after copy dot enhancement;
    Figures 5A and 5B are a schematic side view and plan view respectively of an example of a flatbed scanner;
    Figure 6 is a flow diagram illustrating operation of an example of a method according to the invention;
    Figure 7 illustrates a reference image;
    Figure 8 illustrates an offset image; and,
    Figure 9 illustrates the offset image of Figure 8 following enhancement using a filter set created by an example of a method according to the invention.

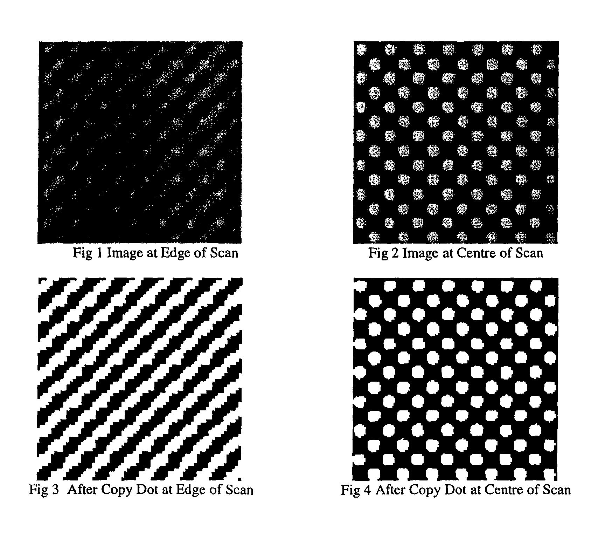

The problem is best illustrated by Figures 1 and 2. The Figures show a scan of 70% dot flat tint black separation. Figure 1 depicts the effect of asymmetric blurring at edge of field and Figure 2 depicts the blurring at the centre of field. The original that was scanned is actually a bi-level image. The known Copy-Dot processing algorithm is required to regenerate actual dots that were present on the film. The "Copy Dot" algorithm thus analyzes the grey level scan and reproduces the original bi-level image as shown in Figures 3 and 4.

It is evident that the image in Figure 3 does not resemble the original and the image in Figure 4 is very close to the original.

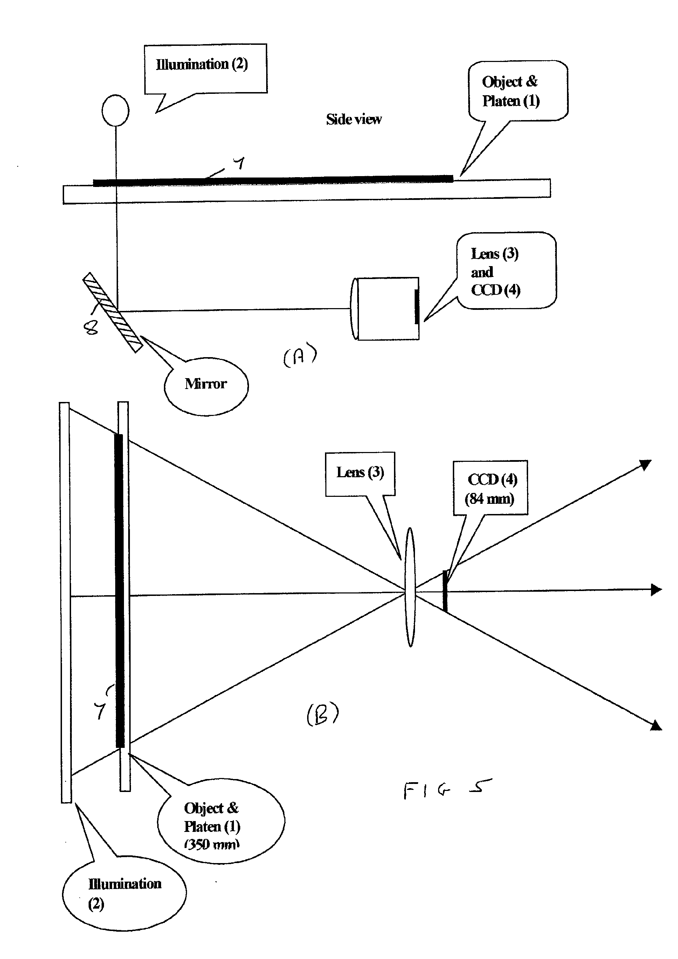

Figures 5A and 5B illustrate very schematically a flatbed scanner. The scanner has a transparent platen 1 above which is located a source of illumination 2. Light from the source 2 passes through an image 7 on the platen 1, is reflected by a mirror 8, and is received by a focusing lens 3. The lens 3 focuses the light which has been modulated in accordance with the underlying image onto a CCD array 4 typically comprising 16800 elements with a five micron pitch. The width of the platen 1 is typically 350mm. It is distortion due to the curvature of the lens 3 which the present invention seeks to compensate.

During a scanning operation, either the platen 1, but more usually the source 2, lens 3 and detector 4, move relative to one another so as to scan successive lines across an image placed on the platen 1.

Data defining the incident intensity of each pixel of the image is supplied by the detector array 4 to a microprocessor 5 which stores the data in a memory 6.

In order to generate the required filter set, an image defining a flat tint, typically 85% dot yellow with a screen angle of 90°, 96 lines/mm resolution and a screen ruling of 150 lines/inch is placed on the platen 1. Several adjacent lines of this image are then scanned and the resultant intensity information is stored in the memory 6.

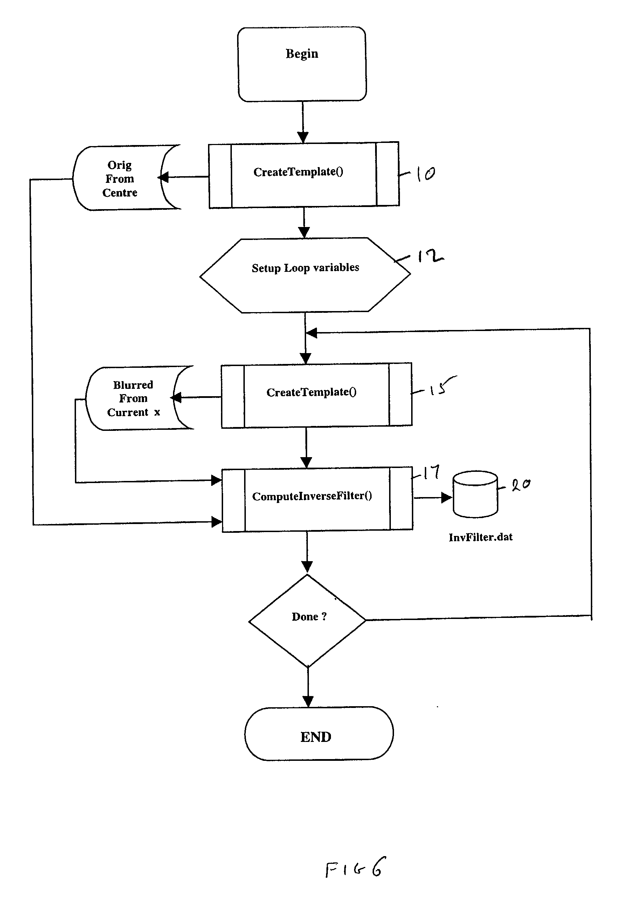

The microprocessor 5 then carries out an inverse filter algorithm to generate the filter set. This is summarized in Figure 6 and will now be described.

The function of this inverse filter algorithm is to derive a set, in this example of 5 x 5, deconvolution filter coefficients for each of a set of pixel patches that will map an image patch or segment from a distance away from the centre of the scan i.e. part of the image which has been detected through a portion of the lens 3 spaced from its centre, to an image patch or segment image through a central portion of the lens 3.

Initially, a 70 x 70 pixel patch is extracted from the centre of the scan and is denoted **Orig** (step 10). In practice, the location of this patch will be determined by correlation with a fixed template to ensure that the patch begins on a dot boundary.

In the next step 12, loop counters are initialized in terms of number of segments to compute. First the filters set for the left half are compared and then the filter set for right half. For the left half computation starts at centre of scan i.e. pixel ~8400 and counts down to 0 in steps of 70 thus there are 120 such segments to be extracted and the respective filters are computed. Likewise the right half starts at pixel 8400 and finishes at pixel 167730 (16800-70).

Another 70 x 70 pixel patch is then extracted from some distance away from the centre of the reference patch, for example starting at pixel 100 and is denoted **Blurred**. Again, correlation is used to align this segment with **Orig** to ensure that both commence at the start of a dot boundary. (Step 15).

The inverse filter is then computed (step 17) and the resulting 25 coefficients are stored in a filter store 20.

The process is then repeated (step 18) for successive 70 x 70 patches in the width direction of the image and hence along the scan direction.

The inverse filter **(inv Filter)** is defined as follows:

$$O_{i+2,j+2} = \begin{bmatrix} a_{0,0} & a_{0,1} & a_{0,2} & a_{0,3} & a_{0,4} \\ a_{1,0} & a_{1,1} & a_{1,2} & a_{1,3} & a_{1,4} \\ a_{2,0} & a_{2,1} & a_{2,2} & a_{2,3} & a_{2,4} \\ a_{3,0} & a_{3,1} & a_{3,2} & a_{3,3} & a_{3,4} \\ a_{4,0} & a_{4,1} & a_{4,2} & a_{4,3} & a_{4,4} \end{bmatrix} \begin{bmatrix} I_{i+0,j+0} & I_{i+0,j+1} & I_{i+0,j+2} & I_{i+0,j+3} & I_{i+0,j+4} \\ I_{i+1,j+0} & I_{i+1,j+1} & I_{i+1,j+2} & I_{i+1,j+3} & I_{i+1,j+4} \\ I_{i+2,j+0} & I_{i+2,j+1} & I_{i+2,j+2} & I_{i+2,j+3} & I_{i+2,j+4} \\ I_{i+3,j+0} & I_{i+3,j+1} & I_{i+3,j+2} & I_{i+3,j+3} & I_{i+3,j+4} \\ I_{i+4,j+0} & I_{i+4,j+1} & I_{i+4,j+2} & I_{i+4,j+3} & I_{i+4,j+4} \end{bmatrix}$$

In this equation, I represents the intensity detected by the CCD array 4 for the particular pixel while a constitutes the coefficients of the filter.

This equation can be solved using standard least square fitting techniques by cycling through each of the 65 x 65 pixels in the **Orig** image segment or patch.

For multiple colours or channels (e.g. Red, Green and Blue), a filter set would be created for each channel.

Once a filter set has been stored for each offset image patch, the system can be used to scan any image and to modify each detected pixel of that image in accordance with its location along the scanning direction or width. Thus, if a pixel falls within the central, reference patch, its intensity will not be modified. If the pixel falls within a particular offset patch of 70 x 70 pixels then the filter corresponding to that patch will be extracted from the memory 20 and will be used to multiply that image pixel intensity value together with its surrounding pixel intensity values by the extracted 5 x 5 filter to obtain a new value for the pixel in question. That is, the equation set out above will be utilized.

An example of the results which can be achieved following the generation of a filter set using the method according to the invention is set out in Figures 7 to 9.

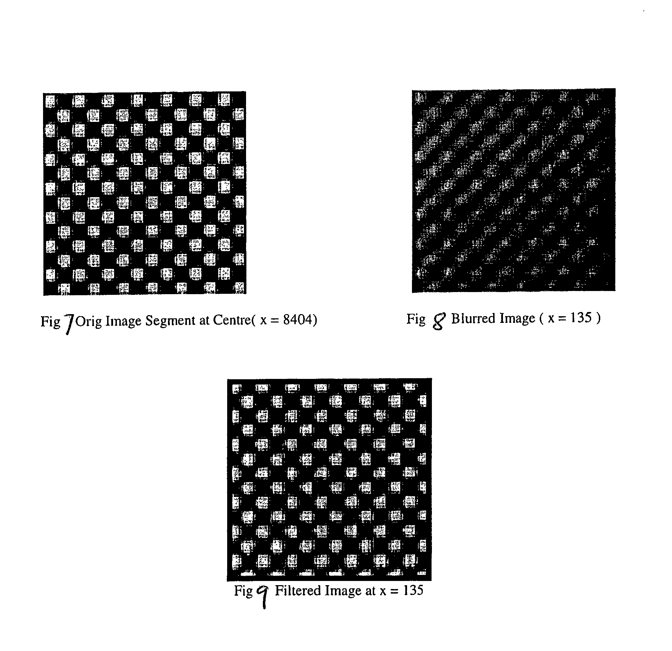

Figure 7 shows the reference image segment, taken from the centre of calibration scan to which all the other segments are mapped. Figure 8 shows one such offset segment taken at pixel position 135, it is clearly seen that this suffers badly from asymmetric blur. Figure 9 shows the filtered version of Figure 8 and it is evident that Figure 9 resembles the image at the centre in terms of sharpness and dot shape.

The benefits of this method are that it is possible to use lower quality lens and still achieve the desired Copy Dot quality.

It would be possible to generate an even sharper image if the steps below are followed:

- Extract the central portion of Image. Sharpen this section by using a suitable Deconvolution method e.g. Gold's method or simply acquire the central portion of the image by optically focusing on it.
- Apply the algorithm outlined as above and the result will be a sharper image overall.

It should be possible to cost reduce the scanner by removing the components required to move the camera or detector array 4 in the fast scan direction. As the image should have similar sharpness across the whole width of scanner and therefore it should be possible to scan the original anywhere on the bed without having to centre the lens/ camera assembly on to the original.

If the focus system can be characterized and a suitable model is derived then it would be possible to do away with focussing components and build a system having fixed focus. This could further cost reduce the scanner.

**Claims**

1. A method of generating a filter set to enable compensation of lens field curvature of a focussing lens, the method comprising

   i) imaging a test chart of a flat tint through different portions of a lens onto a detector;
   ii) generating a reference image of a two-dimensional array of pixels of the test chart imaged through a substantially central portion of the lens;
   iii) generating an offset image of a two dimensional array of pixels of the test chart imaged through a portion of the lens offset from the central portion, the two-dimensional array offset image being registered with respect to the reference image;
   iv) computing and storing a set of filter coefficients which convert the offset image to the reference image; and
   v) repeating steps iii) and iv) for a number of different offset images.

2. A method according to claim 1, wherein the offset images abut one another.

3. A method according to claim 1 or claim 2, wherein a single set of filter coefficients is associated with each offset image.

4. A method according to any of claims 1 to 3, wherein step iv) comprises a least squares fitting algorithm.

5. A method according to any of the preceding claims, wherein the test chart is a half-tone representation.

6. A method according to any of the preceding claims, wherein a filter set is generated for each of a plurality of different colours.

7. Apparatus for generating a filter set to enable compensation of lens field curvature of a focusing lens, the apparatus comprising a scanning system including a source of illumination, a focusing lens and a detector array for imaging a test chart of a flat tint focused through different portions of the lens onto the detector array; and a processing system for carrying out a method according to any of the preceding claims.

8. Apparatus according to claim 7, wherein the detector comprises a CCD array.

**9.** A storage medium storing a set of filters created by a method according to any of claims 1 to 6.

Fig 1 Image at Edge of Scan

Fig 2 Image at Centre of Scan

Fig 3 After Copy Dot at Edge of Scan

Fig 4 After Copy Dot at Centre of Scan

Illumination (2)

Object & Platen (1)

Side view

Lens (3) and CCD (4)

(A)

Mirror

Lens (3)

CCD (4) (84 mm)

(B)

Object & Platen (1) (350 mm)

Illumination (2)

FIG 5

FIG 6

Fig 7 Orig Image Segment at Centre( x = 8404)

Fig 8 Blurred Image ( x = 135 )

Fig 9 Filtered Image at x = 135

## EUROPEAN SEARCH REPORT

**European Patent Office**

**Application Number**

EP 02 25 0024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 562 814 A (XEROX CORP) 29 September 1993 (1993-09-29) * abstract * * page 2, line 4 - line 22 * * page 2, line 57 - page 3, line 3 * ----- | 1-9 | H04N1/00 |

| | |
|---|---|
| | TECHNICAL FIELDS SEARCHED (Int.Cl.7) |
| | H04N |

The present search report has been drawn up for all claims

| Place of search | Date of completion of the search | Examiner |
|---|---|---|
| THE HAGUE | 7 June 2002 | Stoffers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 0024

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2002

| Patent document cited in search report | | Publication date | Patent family member(s) | | Publication date |
|---|---|---|---|---|---|
| EP 0562814 | A | 29-09-1993 | US | 5307175 A | 26-04-1994 |
| | | | DE | 69314833 D1 | 04-12-1997 |
| | | | DE | 69314833 T2 | 20-05-1998 |
| | | | EP | 0562814 A1 | 29-09-1993 |
| | | | JP | 6054182 A | 25-02-1994 |

EPO FORM P0459

For more details about this annex : see Official Journal of the European Patent Office, No. 12/82